# EUROPEAN PATENT APPLICATION

(11) **EP 4 818 033 A1**
(43) Date of publication of application: **07.10.2026**
(21) Application number: 26164925.5
(22) Date of filing: 16.03.2026
(51) Int. Cl.: B63H 20/32, B63H 20/00, B63H 21/17

(54) **ELECTRIC OUTBOARD MACHINE**

(30) Priority: 19.03.2025 JP 2025045426
(71) Applicant: Suzuki Motor Corporation, Hamamatsu-shi, Shizuoka 432-8611 (JP)
(72) Inventor: KAMIKAWA, Hiroki, Hamamatsu-shi (JP)
(74) Representative: Haseltine Lake Kempner LLP

(57) **Abstract**

An electric outboard machine (1) for propelling a boat, includes: a case (3) provided in a lower part of the machine; a propeller (51) rotatably supported in the case; and a motor (55) provided in the case and rotates the propeller. The case (3) includes: a cylindrical portion (5) including an axis, being formed in a cylindrical shape, and being provided with a motor accommodating portion (10); an outer lid (41, 81) coupled to a peripheral edge portion (5B) of an opening portion (5A) on a front side of the cylindrical portion, and closes the opening portion; a plate-shaped member (31) provided in the cylindrical portion behind the outer lid and in front of the motor accommodating portion, having a plate-like outer shape extending in up-down and left-right directions in an overall view, being fitted into the cylindrical portion and fixed to the cylindrical portion, and a connecting member (46) connects the outer lid and the plate-shaped member to each other.

## Description

### TECHNICAL FIELD

The present invention relates to an electric outboard machine.

### BACKGROUND ART

An electric outboard machine is known that includes a motor (electric motor) as a power source for rotating a propeller. Some electric outboard machines have a motor disposed in a case that is provided in a lower part of the electric outboard machine, that is, in a portion of the electric outboard machine that is submerged in water. JPH10-16886A (Patent Literature 1) describes a boat propulsion device that corresponds to such an electric outboard machine.

In the boat propulsion device described in the above publication, an electric drive unit is provided in a lower part of the boat propulsion device that is submerged in water, and an electric motor is provided within a casing that forms an outer shell of the electric drive unit. The casing of the electric drive unit has a cylindrical casing body, an axis of which extends in a front-rear direction, and a front end of the casing body is open. A lid is provided at the front end of the casing body to close an opening portion at the front end of the casing body. The lid is fastened to the casing body by a pair of left and right fasteners.

### CITATION LIST

### PATENT LITERATURE

Patent Literature 1: JPH10-16886A

In the boat propulsion device described in the above publication, for example, it is conceivable that with continued use, one or both of the pair of left and right fasteners may loosen, causing coupling between the casing body and the lid to become incomplete. When the coupling between the casing body and the lid is incomplete, a gap will be formed between the opening portion of the casing body and the lid, allowing water to enter the casing through the gap and causing an electric motor inside the casing to come into contact with water. Contact of the electric motor with water must be avoided as it may result in electric motor failure.

### SUMMARY

The present invention is made in consideration of the circumstances described above, and an object of the present invention is to provide an electric outboard machine having a structure in which an opening portion of a case provided in a submerged part of the electric outboard machine is closed by attaching a lid to the opening portion, and which can prevent coupling between a case and the lid from becoming incomplete due to, for example, continued use.

In order to solve the above problems, the present invention is an electric outboard machine for propelling a boat, the electric outboard machine including a case provided in a lower part of the electric outboard machine, a propeller rotatably supported in the case, and a motor provided in the case and configured to rotate the propeller, where the case includes: a cylindrical portion including an axis extending in a front-rear direction, the cylindrical portion being formed in a cylindrical shape with an open front side, and the cylindrical portion being provided with a motor accommodating portion in which the motor is accommodated; an outer lid coupled to a peripheral edge portion of an opening portion on a front side of the cylindrical portion, and the outer lid being configured to close the opening portion; a plate-shaped member provided in the cylindrical portion behind the outer lid and in front of the motor accommodating portion, the plate-shaped member having a plate-like outer shape extending in up-down and left-right directions in an overall view, the plate-shaped member being fitted into the cylindrical portion and fixed to the cylindrical portion, and a connecting member configured to connect the outer lid and the plate-shaped member to each other.

According to the present invention, in the electric outboard machine having a structure in which the opening portion in the case provided in a submerged part of the electric outboard machine is closed by attaching the lid to the opening portion, it is possible to prevent coupling between the case and the lid from becoming incomplete due to, for example, continued use.

### BRIEF DESCRIPTION OF DRAWINGS

FIG. 1 is an explanatory diagram illustrating an electric outboard machine according to an example of the present invention.
FIG. 2 is a cross-sectional view of a lower unit of the electric outboard machine according to the example of the present invention.
FIG. 3 is an external view illustrating an outer case of the electric outboard machine according to the example of the present invention as viewed from the front.
FIG. 4 is a cross-sectional view illustrating the outer case taken along a line E-E in FIG. 3, as viewed from the left.
FIG. 5 is an exploded view of a front part of the outer case in FIG. 4.
FIG. 6 is an external view illustrating a state in which an outer case body of the outer case of the electric outboard machine according to the example of the present invention is viewed from the front.
FIG. 7A is an external view illustrating an inner lid of the outer case of the electric outboard machine according to the example of the present invention as viewed from the front, FIG. 7B is an external view illustrating a washer in the outer case as viewed from the front, and FIG. 7C is an external view illustrating a stopper in the outer case as viewed from the front.
FIG. 8A is an external view illustrating the stopper coupled to the washer in the outer case of the electric outboard machine according to the example of the present invention, as viewed from the front, and FIG. 8B is a cross-sectional view illustrating the stopper and washer taken along a line F-F in FIG. 8A.
FIG. 9 is an external view illustrating an outer lid of the outer case of the electric outboard machine according to the example of the present invention.
FIG. 10 is an external view illustrating a modification example of the outer lid of the outer case of the electric outboard machine according to the example of the present invention.

### DESCRIPTION OF EMBODIMENTS

An electric outboard machine according to an embodiment of the present invention includes a case provided in a lower part of the electric outboard machine, a propeller rotatably supported in the case, and a motor provided in the case and configured to rotate the propeller. In addition, the case of the electric outboard machine of this embodiment includes a cylindrical portion having an axis extending in a front-rear direction, formed in a cylindrical shape with an open front side, and provided with a motor accommodating portion in which the motor is accommodated, an outer lid coupled to a peripheral edge portion of an opening portion on a front side of the cylindrical portion and closing the opening portion, a plate-shaped member provided in the cylindrical portion behind the outer lid and in front of the motor accommodating portion, the plate-shaped member having a plate-like outer shape extending in up-down and left-right directions in an overall view, the plate-shaped member being fitted into the cylindrical portion and fixed to the cylindrical portion, and a connecting member that connects the outer lid and the plate-shaped member to each other.

In the electric outboard machine of this embodiment, the outer lid is attached to the opening portion on the front side of the cylindrical portion of the case, and the opening portion is closed by the outer lid. The outer lid is fixed to the cylindrical portion by being coupled to the peripheral edge portion of the opening portion. Furthermore, a plate-shaped member is fitted into the cylindrical portion and fixed to the cylindrical portion. In addition, the outer lid is connected to the plate-shaped member by the connecting member. In this way, the outer lid is fixed to the cylindrical portion by a first fixing method, in which the outer lid itself is coupled to the peripheral edge portion of the opening portion of the cylindrical portion, and the outer lid is fixed to the cylindrical portion by a second fixing method, in which the outer lid is connected to a plate-shaped member fixed to the cylindrical portion via the connecting member. That is, the outer lid is doubly fixed to the cylindrical portion. Therefore, with the electric outboard machine of this embodiment, it is possible to prevent coupling between the cylindrical portion and the outer lid from becoming incomplete due to, for example, continued use of the electric outboard machine.

### Example

An example of the present invention will be described with reference to the drawings. For ease of description, when describing directions of up (Ud), down (Dd), front (Fd), back (Bd), left (Ld), and right (Rd) in relation to the examples, the arrows will be referred to in the lower left corner of each figure.

### Electric Outboard Machine

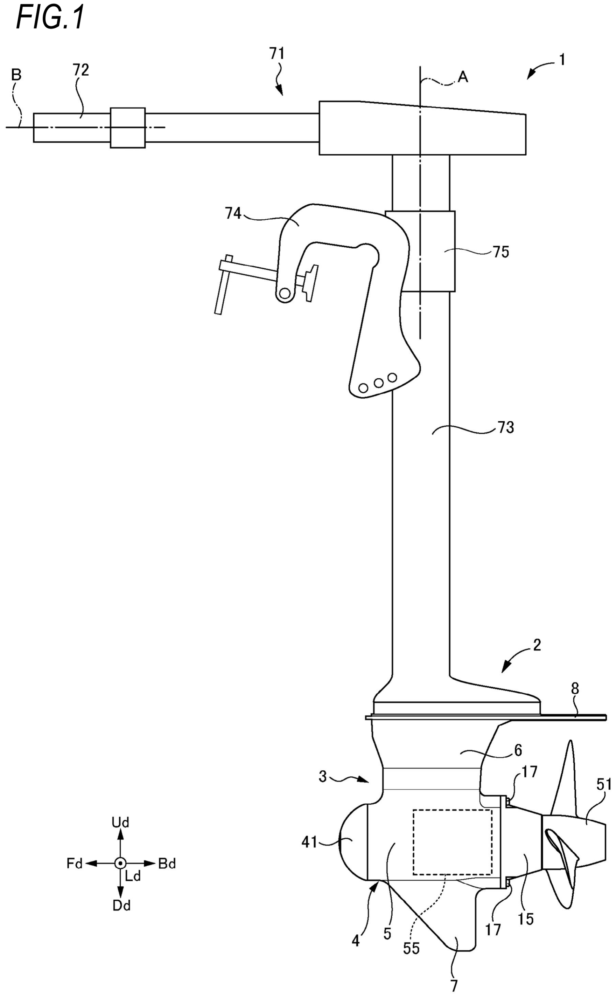

FIG. 1 illustrates an electric outboard machine 1 according to an example of the present invention. The electric outboard machine 1 is a device for propelling a boat, and is attached to the boat. As illustrated in FIG. 1, the electric outboard machine 1 includes a lower unit 2, an operating handle 71, a connecting portion 73, a clamp bracket 74, and a swivel bracket 75.

The lower unit 2 is a unit provided at a lower part of the electric outboard machine 1. The lower unit 2 is provided with a propeller 51, a motor 55, and the like. The operating handle 71 is a handle for operating the electric outboard machine 1 and is provided on an upper part of the electric outboard machine 1. The connecting portion 73 is a member that connects the lower unit 2 and the operating handle 71, and is formed in a columnar or tubular shape that extends in an up-down direction. The clamp bracket 74 is a mechanism for attaching and fixing the electric outboard machine 1 to a transom of the boat. The swivel bracket 75 is a mechanism that supports the connecting portion 73 so that the connecting portion 73 can pivot about its axis A. The swivel bracket 75 is connected to the clamp bracket 74.

When the electric outboard machine 1 is attached to the transom of the boat and the boat is stopped, the lower unit 2 is positioned below the water surface, and the operating handle 71, the clamp bracket 74, and the swivel bracket 75 are positioned above the water surface. An operator can change the rotation speed and direction of the motor 55 provided in the lower unit 2 by grasping a grip 72 provided at a tip of the operating handle 71 and pivoting the grip 72 around its axis B. By changing the rotation speed of the motor 55, the rotation speed of the propeller 51 can be changed, and the speed of the boat can be changed. In addition, by changing the rotation direction of the motor 55, the rotation direction of the propeller 51 can be changed, and the boat can be switched between forward and reverse motion. In addition, the operator can grasp the grip 72 and pivot the operating handle 71 around the axis A of the connecting portion 73 to pivot the lower unit 2 horizontally and change the direction of the propeller 51 provided on the lower unit 2. By changing the direction of the propeller 51, the boat can be turned.

### Lower Unit

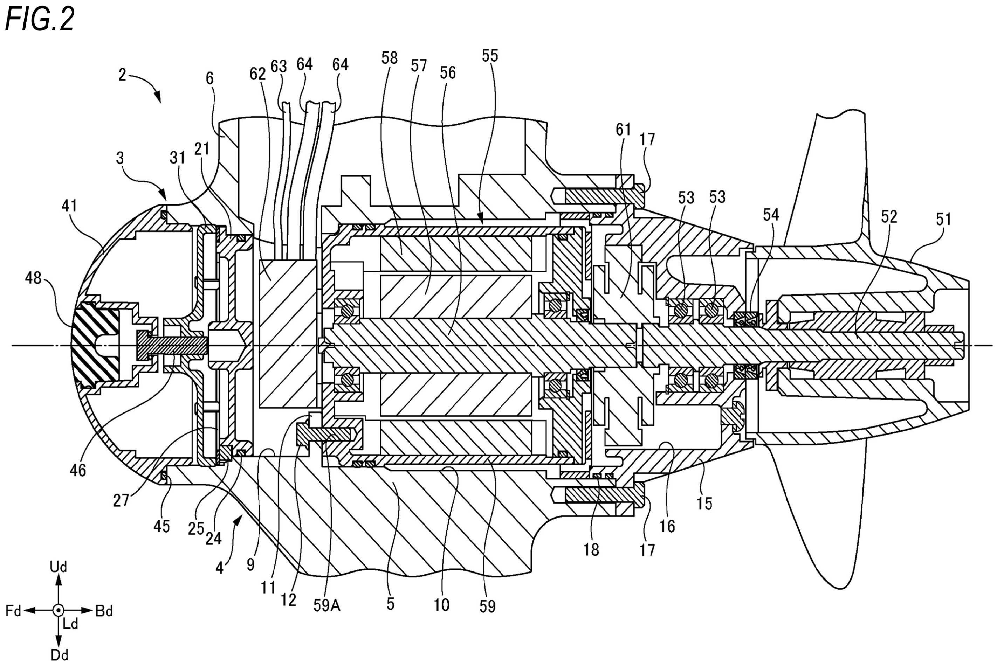

FIG. 2 illustrates a cross section of the lower unit 2 as viewed from the left, taken along a plane that passes through a center of the lower unit 2 in a left-right direction and extends in up-down and front-rear directions.

As illustrated in FIG. 2, the lower unit 2 includes an outer case 3, the propeller 51, a propeller shaft 52, the motor 55, a reduction gear 61, an inverter 62, and the like.

The outer case 3 forms an outer shell of the lower unit 2. With the electric outboard machine 1 mounted on the transom of the boat, when the boat is stationary, the outer case 3 is disposed in water. The outer case 3 includes an outer case body 4, a reduction gear case portion 15, an inner lid 21, a stopper 31 for the inner lid 21, an outer lid 41, and the like. The outer case 3 is a specific example of a "case". Moreover, the stopper 31 is a specific example of a "plate-shaped member".

As illustrated in FIG. 1, the outer case body 4 has a cylindrical portion 5 formed in a cylindrical shape having an axis extending in the front-rear direction, and a columnar portion 6 formed in a columnar shape extending upward from the cylindrical portion 5. The outer case body 4 is made of a metal material such as aluminum. In addition, a skeg 7 is integrally formed or attached to a lower end of the cylindrical portion 5. An anti-cavitation plate 8 is integrally formed or attached to an upper portion of the columnar portion 6.

The reduction gear case portion 15 has an axis extending in the front-rear direction and is formed in a cylindrical shape of which the diameter decreases toward the rear. The reduction gear case portion 15 is formed from, for example, the same material as the outer case body 4. The reduction gear case portion 15 is attached to a rear end of the cylindrical portion 5 of the outer case body 4 by using a fastening member 17 such as a bolt. As illustrated in FIG. 2, a seal 18 (for example, a sealing member such as an O-ring) is provided between the cylindrical portion 5 and the reduction gear case portion 15 to prevent water from entering the outer case 3 and to prevent the lubricating oil in the outer case 3 from leaking out of the outer case 3.

The inner lid 21, the stopper 31, and the outer lid 41 are provided on a front end side of the cylindrical portion 5 of the outer case body 4. A front opening of the cylindrical portion 5 is doubly covered by the inner lid 21 and the outer lid 41. The stopper 31 has a function of preventing the inner lid 21 from coming off the cylindrical portion 5, and a function of fixing the outer lid 41 to the cylindrical portion 5. A structure of a front part of the outer case 3 including the inner lid 21, the stopper 31, and the outer lid 41 will be described in detail below.

Further, an inverter accommodating portion 9, a motor accommodating portion 10, and a reduction gear accommodating portion 16 are provided within the outer case 3. Specifically, the inverter accommodating portion 9 and the motor accommodating portion 10 are provided inside the cylindrical portion 5 of the outer case body 4. The inverter accommodating portion 9 is disposed in front of the motor accommodating portion 10. The reduction gear accommodating portion 16 is provided inside the reduction gear case portion 15. The reduction gear accommodating portion 16 is disposed behind the motor accommodating portion 10.

The propeller 51 generates a propulsive force for the boat by rotating. The propeller 51 is disposed at the rear of the outer case 3 and is rotatably supported by the outer case 3 via the propeller shaft 52 and a bearing 53. The propeller shaft 52 extends in the front-rear direction. A front portion of the propeller shaft 52 is disposed within the reduction gear accommodating portion 16 and is rotatably supported by the reduction gear case portion 15 via the bearing 53. Furthermore, the propeller 51 is attached and fixed to a rear end side of the propeller shaft 52. In addition, a seal 54 (sealing member, sealing mechanism, or the like) is provided between a rear end of the reduction gear case portion 15 and the propeller shaft 52 to prevent water from entering the outer case 3 and to prevent lubricating oil from inside the outer case 3 from leaking out of the outer case 3.

The motor 55 is a power source that rotates the propeller 51. The motor 55 is disposed in the motor accommodating portion 10 of the outer case 3. The motor 55 is, for example, an AC motor. The motor 55 has an output shaft 56, a rotor 57, a stator 58, and a motor case 59. The motor case 59 is formed in a cylindrical shape having an axis extending in the front-rear direction. The output shaft 56, the rotor 57, and the stator 58 are disposed within a motor case 59. The output shaft 56 extends in the front-rear direction and is rotatably supported by the motor case 59 via bearings. The rotor 57 is located on an outer periphery of the output shaft 56 and rotates integrally with the output shaft 56. The stator 58 is located on an outer periphery of the rotor 57 and is fixed to the motor case 59.

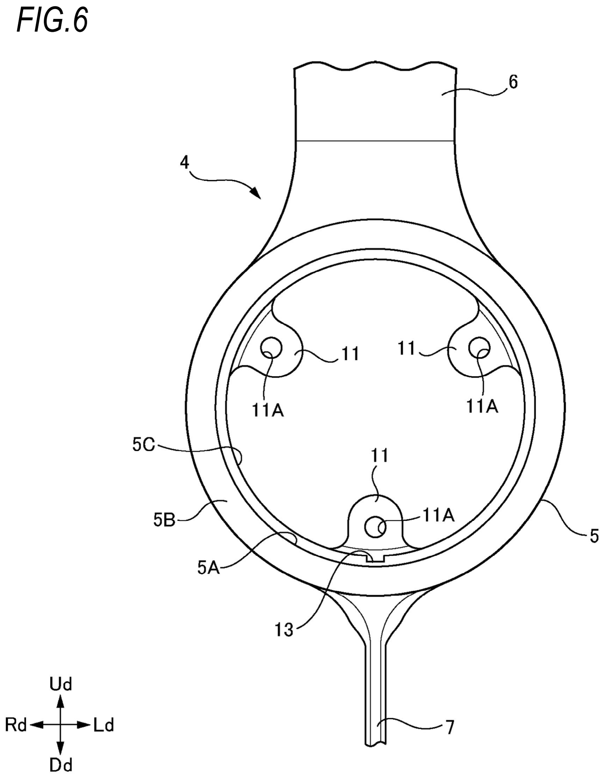

Furthermore, within the cylindrical portion 5 of the outer case body 4, at a boundary between the inverter accommodating portion 9 and the motor accommodating portion 10, there are provided a plurality of (for example, three) protrusions 11 for fixing the motor 55 to the outer case body 4. Each protrusion 11 protrudes inward from an inner surface of the cylindrical portion 5. The plurality of protrusions 11 are arranged at predetermined intervals (for example, at intervals of 120 degrees) in a circumferential direction of the cylindrical portion 5 (see FIG. 6). A plurality of (for example, three) fastening holes 59A are provided on a front surface of the motor case 59 so as to correspond to these protrusions 11. As illustrated in FIG. 2, the motor 55 is coupled and fixed to the outer case body 4 by inserting a fastening member 12 such as a bolt into an insertion hole 11A (see FIG. 6) provided in the protrusion 11 and fastening the fastening member 12 to the fastening hole 59A.

The reduction gear 61 is a device that transmits the rotation of the output shaft 56 to the propeller shaft 52 while reducing the rotation speed, and has, for example, a planetary reduction mechanism. The reduction gear 61 is disposed within the reduction gear accommodating portion 16 of the outer case 3.

The inverter 62 is a device that controls the driving of the motor 55. The inverter 62 outputs a drive current to the motor 55 for driving the motor 55. The inverter 62 is disposed in the inverter accommodating portion 9 of the outer case 3. In this example, the inverter 62 is attached to a front surface of the motor case 59. In addition, a signal cable 63 for transmitting a control signal to the inverter 62 and a power cable 64 for supplying power to the inverter 62 are connected to the inverter 62.

### Front Structure of Outer Case

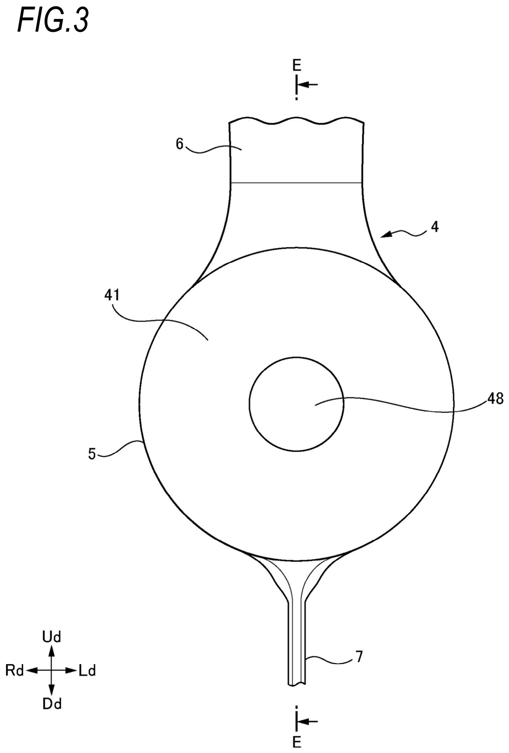

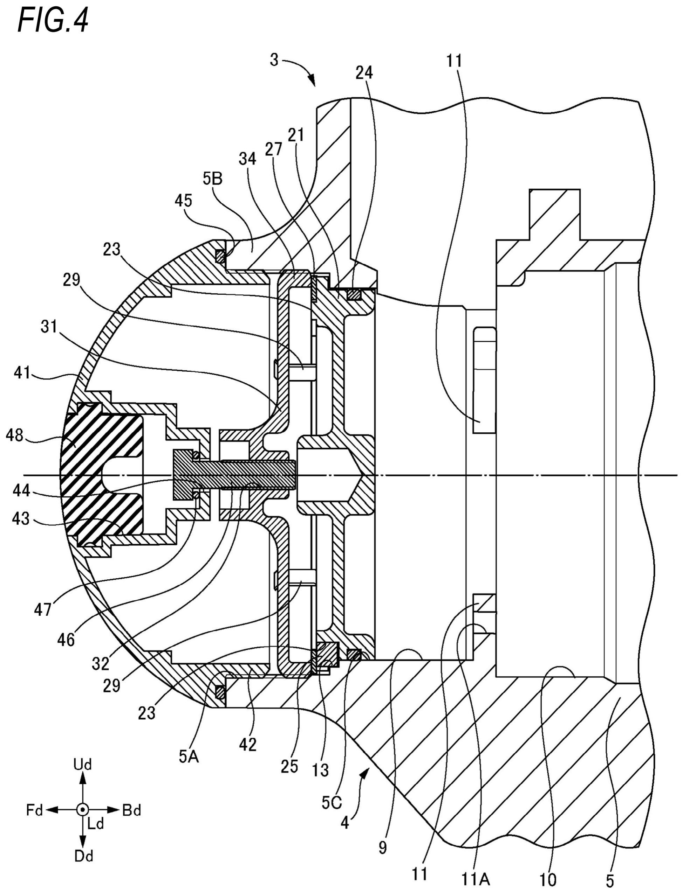

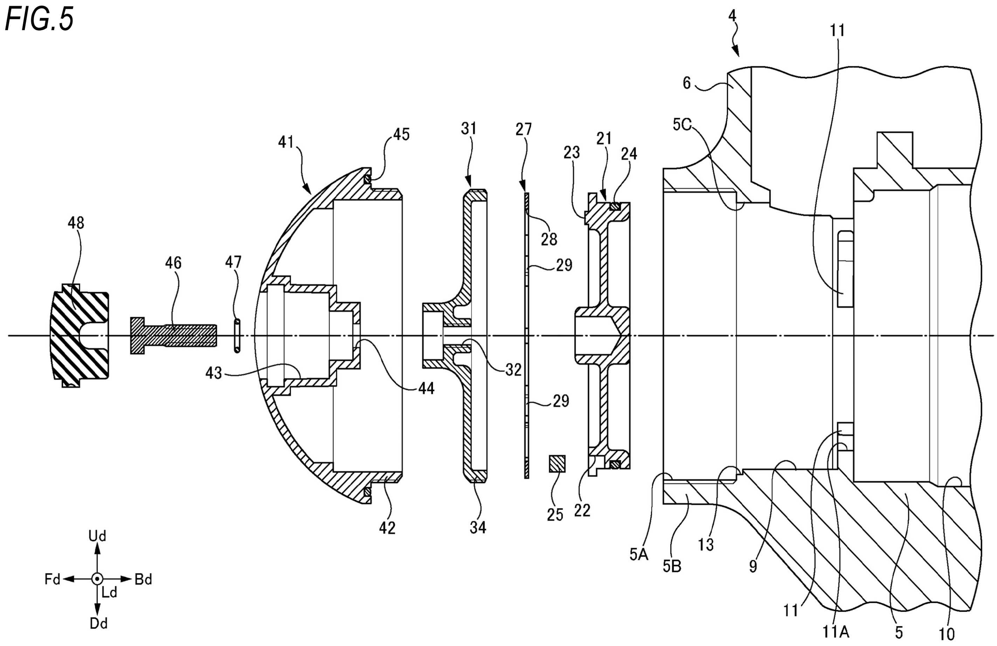

FIG. 3 illustrates the outer case 3 as viewed from the front. FIG. 4 illustrates a cross section of the front part of the outer case 3 taken along a line E-E in FIG. 3, as viewed from the left (the right in FIG. 3). FIG. 5 illustrates the front part of the outer case 3 in an exploded state.

As illustrated in FIGS. 4 and 5, at the front of the outer case 3, the inner lid 21, a washer 27, the stopper 31, the outer lid 41, a connecting member 46, and a cap 48 are attached in this order to an opening portion 5A on the front side of the cylindrical portion 5 of the outer case body 4.

FIG. 6 illustrates the outer case body 4 as viewed from the front. As illustrated in FIGS. 5 and 6, the front side of the cylindrical portion 5 of the outer case body 4 is open. Threads are formed on an inner peripheral surface of a peripheral edge portion 5B of the opening portion 5A on the front side of the cylindrical portion 5 for connecting the stopper 31 and the outer lid 41. Further, an inner lid attachment portion 5C for attaching the inner lid 21 is formed at a rear portion of the opening portion 5A in the cylindrical portion 5. The inner lid attachment portion 5C is disposed in front of the inverter accommodating portion 9. The inner lid attachment portion 5C is coaxial with the opening portion 5A. Additionally, an inner diameter of the inner lid attachment portion 5C is smaller than an inner diameter of the opening portion 5A. Further, a fitted groove 13 for fixing the inner lid 21 to the inner lid mounting portion 5C in the circumferential direction is formed in a lower part of a front edge of the inner lid attachment portion 5C. The fitted groove 13 is a specific example of a "first fitted portion".

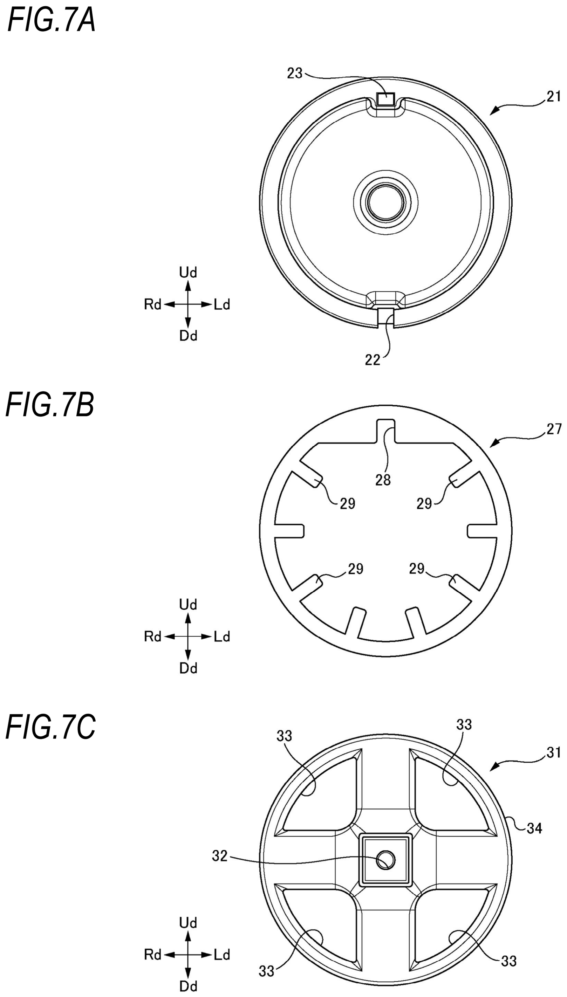

FIG. 7A illustrates the inner lid 21 as viewed from the front. As illustrated in FIG. 5 and FIG. 7A, the inner lid 21 is formed in a disk shape that expands in the up-down and left-right directions when viewed from the overall perspective. The inner lid 21 is formed, for example, from the same material as the outer case body 4. As illustrated in FIG. 4, the inner lid 21 is provided in the cylindrical portion 5 in front of the inverter accommodating portion 9. The inner lid 21 is disposed at the rear (back) of the inside of the opening portion 5A of the cylindrical portion 5, and closes the opening portion 5A at that position. In addition, the inner lid 21 is disposed coaxially with the cylindrical portion 5. Further, a rear portion of the inner lid 21 is removably fitted into the inner lid attachment portion 5C formed on the cylindrical portion 5.

A groove is formed around the entire outer circumferential surface of the rear portion of the inner lid 21, and a seal 24 (for example, a sealing member such as an O-ring) is inserted into the groove. The seal 24 has a function of preventing water from entering the inverter accommodating portion 9 or the motor accommodating portion 10 through the opening portion 5A of the cylindrical portion 5. The seal 24 is in liquid-tight contact with an inner peripheral surface of the inner lid attachment portion 5C.

As illustrated in FIG. 7A, a fitted groove 22 for fixing the inner lid 21 to the inner lid attachment portion 5C in the circumferential direction is formed in a lower part of an outer edge of a front part of the inner lid 21. As can be seen from FIGS. 4 and 5, the inner lid 21 is fitted into the inner lid attachment portion 5C so that a position of the fitted groove 22 matches a position of the fitted groove 13 formed in the inner lid attachment portion 5C. A key member 25 is fitted into the fitted groove 13 and the fitted groove 22. As a result, the inner lid 21 is fixed to the cylindrical portion 5 so as not to move in the circumferential direction of the cylindrical portion 5. The fitted grooves 13 and 22 and the key member 25 form a fixing mechanism that fixes the cylindrical portion 5 and the inner lid 21 to each other in the circumferential direction of the cylindrical portion 5. The fitted groove 22 is a specific example of a "second fitted portion".

As illustrated in FIG. 5 and FIG. 7A, the inner lid 21 is provided with a locking protrusion 23 for fixing the washer 27 to the inner lid 21 so as not to move in the circumferential direction. The locking protrusion 23 protrudes forward from an upper portion of an outer periphery of a front surface of the inner lid 21.

FIG. 7B illustrates the washer 27 as viewed from the front. As illustrated in FIG. 5 and FIG. 7B, the washer 27 is made of, for example, metal and is formed into an annular plate shape when viewed from the front. The washer 27 is disposed in front of the inner lid 21 within the opening portion 5A of the cylindrical portion 5. In addition, the washer 27 is detachable from the cylindrical portion 5. The washer 27 has a function of restricting the stopper 31 from moving in the circumferential direction of the cylindrical portion 5. The washer 27 has a locking notch 28 that is locked to the inner lid 21, and a plurality of latching portions 29 that are latched to the stoppers 31. As illustrated in FIG. 4, the washer 27 is disposed in front of the inner lid 21 with the locking protrusion 23 of the inner lid 21 inserted into the locking notch 28. This fixes the washer 27 to the inner lid 21 so as not to move in the circumferential direction. The washer 27 is a specific example of a "movement restricting member", and the locking notch 28 is a specific example of a "locking portion".

FIG. 7C illustrates the stopper 31 as viewed from the front. As illustrated in FIG. 5 and FIG. 7C, the stopper 31 has a disk-like shape that expands in the up-down and left-right directions when viewed from the overall perspective. The stopper 31 is formed, for example, from the same material as the outer case body 4. The stopper 31 is disposed in front of the washer 27 within the opening portion 5A of the cylindrical portion 5. Further, the stopper 31 is disposed coaxially with the cylindrical portion 5. An outer periphery of the stopper 31 serves as a coupling portion 34 that couples the stopper 31 with the peripheral edge portion 5B of the opening portion 5A. An outer peripheral surface of the coupling portion 34 is formed with threads that mesh with threads formed on the inner peripheral surface of the peripheral edge portion 5B of the opening portion 5A. As illustrated in FIG. 4, the stopper 31 is coupled (fastened) with the cylindrical portion 5 by being screwed to an innermost portion (rear portion) of the peripheral edge portion 5B of the opening portion 5A. In addition, when the stopper 31 is screwed into the rear portion of the opening portion 5A, it pushes the washer 27 and the inner lid 21 rearward, supporting them to prevent them from moving forward. That is, the stopper 31 prevents the washer 27 and the inner lid 21 from slipping out of the opening portion 5A of the cylindrical portion 5. Moreover, the stopper 31 is detachable from the cylindrical portion 5.

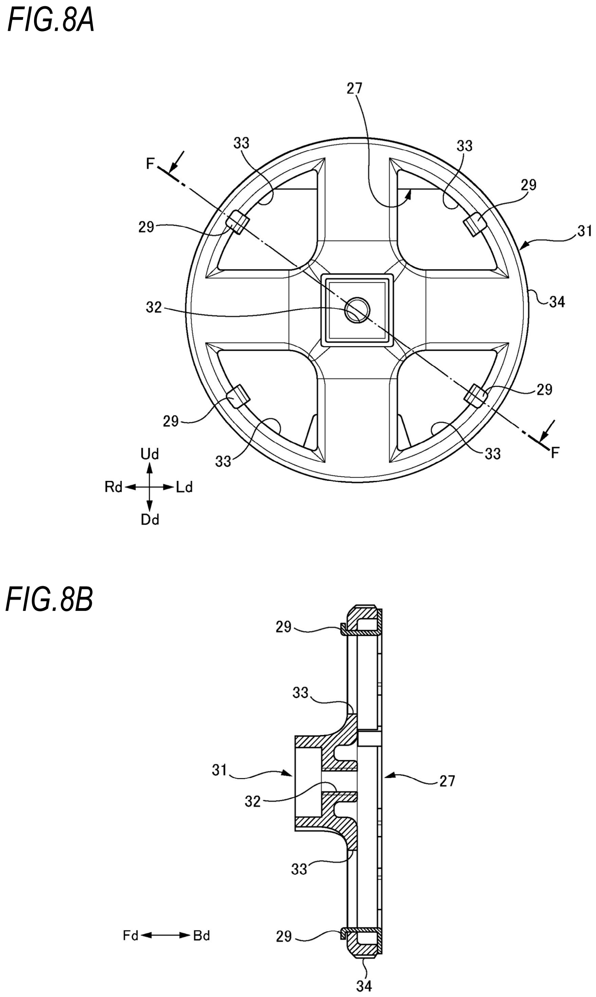

Further, the stopper 31 is restricted from moving in the circumferential direction relative to the washer 27 by the respective latching portions 29 of the washer 27. FIG. 8A illustrates the stopper 31 coupled to the washer 27 via the latching portion 29 as viewed from the front. FIG. 8B illustrates a cross section of the stopper 31 and the washer 27 taken along a line F-F in FIG. 8A. Before the washer 27 is attached to the outer case body 4, each of the latching portions 29 of the washer 27 extends inward from the inner peripheral surface of the outer periphery of the washer 27, as illustrated in FIG. 7B. As illustrated in FIG. 7C, the stopper 31 has a plurality of insertion holes 33 formed therethrough. The inner lid 21 is attached to the inner lid attachment portion 5C, the washer 27 is placed in front of the inner lid 21, and the stopper 31 is screwed to the rear portion of the opening portion 5A. Then, as illustrated in FIG. 8A and FIG. 8B, each of the latching portions 29 of the washer 27 is bent forward so as to hook onto a peripheral edge portion of the insertion hole 33 of the stopper 31. In this manner, each of the latching portions 29 of the washer 27 is hooked onto the stopper 31, whereby the washer 27 and the stopper 31 are coupled to each other, and the circumferential movement of the stopper 31 relative to the washer 27 is restricted.

As illustrated in FIG. 4, the washer 27 is positioned in front of the inner lid 21 with the locking protrusion 23 of the inner lid 21 inserted into the locking notch 28, thereby fixing the washer 27 so that it does not move circumferentially relative to the inner lid 21. At the same time, each of the latching portions 29 of the washer 27 is hooked onto the stopper 31, thereby restricting the circumferential movement of the stopper 31 relative to the washer 27. As a result of the above, the circumferential movement of the stopper 31 relative to the inner lid 21 is restricted via the washer 27. Furthermore, since the seal 24 attached to the inner lid 21 is in close contact with the inner lid attachment portion 5C of the cylindrical portion 5, the inner lid 21 is unlikely to move in the circumferential direction of the cylindrical portion 5. Furthermore, the inner lid 21 is fixed by a fixing mechanism (the fitted groove 13, the fitted groove 22, and the key member 25) so as not to move in the circumferential direction relative to the cylindrical portion 5. Therefore, the washer 27 restricts the circumferential movement of the stopper 31 relative to the inner lid 21, thereby restricting the circumferential movement of the stopper 31 relative to the cylindrical portion 5.

Further, a connecting hole 32 for connecting the outer lid 41 to the stopper 31 via the connecting member 46 is formed in a center of the stopper 31. The connecting hole 32 has an inner peripheral surface formed with a screw.

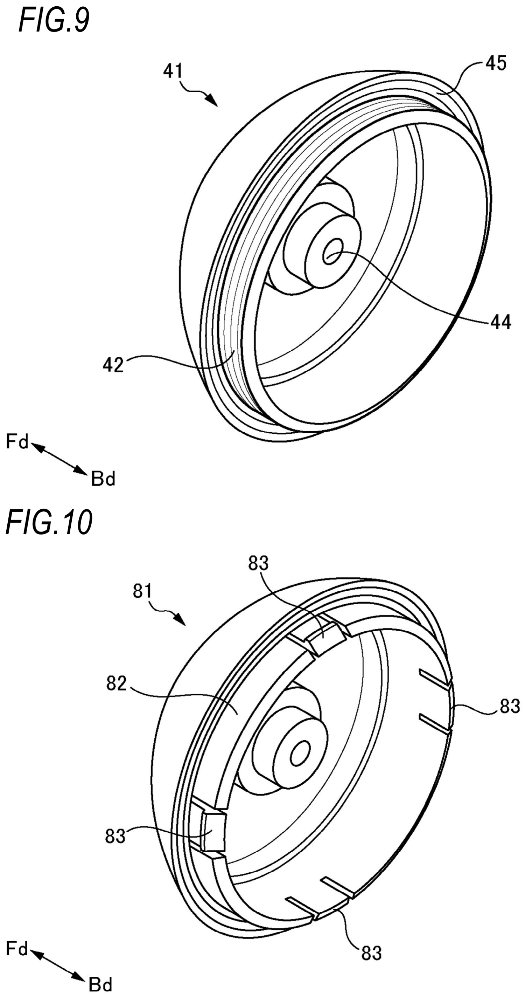

FIG. 9 illustrates the outer lid 41 as viewed obliquely from behind. The outer lid 41 has a spherical crown or cup-like outer shape, as illustrated in FIGS. 5 and 9. The outer lid 41 is formed from, for example, the same material as the outer case body 4. As illustrated in FIG. 4, the outer lid 41 is provided at the front end of the opening portion 5A of the cylindrical portion 5, and closes the opening portion 5A at that position. In addition, the outer lid 41 is located in front of the stopper 31. In addition, the outer lid 41 is disposed coaxially with the cylindrical portion 5. Further, a coupling portion 42 is formed on an outer periphery of a rear end side of the outer lid 41 to couple the outer lid 41 with the peripheral edge portion 5B of the opening portion 5A. An outer circumferential surface of the coupling portion 42 is formed with threads that mesh with threads formed on the inner peripheral surface of the peripheral edge portion 5B of the opening portion 5A. The outer lid 41 is coupled (fastened) with the cylindrical portion 5 by being screwed to an opening end side portion (front portion) of the peripheral edge portion 5B of the opening portion 5A. In addition, the outer lid 41 is detachable from the cylindrical portion 5.

Further, a groove is formed around the entire outer circumferential surface of the rear portion of the outer lid 41, and a seal 45 (for example, a sealing member such as an O-ring) is inserted into the groove. The seal 45 has a function of preventing water from entering the opening portion 5A of the cylindrical portion 5. The seal 45 is in liquid-tight contact with a front end surface of the peripheral edge portion 5B of the opening portion 5A of the cylindrical portion 5.

Further, a recess 43 that opens forward is formed in the center of the outer lid 41. Further, a through hole 44 is formed in the center of a bottom surface of the recess 43. In addition, the connecting member 46 such as a bolt is inserted into the through hole 44 from the front of the outer lid 41. The connecting member 46 is a member that connects the outer lid 41 and the stopper 31 to each other. As illustrated in FIG. 4, a head (front end) of the connecting member 46 is disposed within the recess 43. A threaded portion of the connecting member 46 passes through the through hole 44, and a tip portion (rear end portion) of the threaded portion of the connecting member 46 is screwed (fastened) into the connecting hole 32 formed in the stopper 31. As a result, the outer lid 41 is connected to the stopper 31. When the outer case body 4 is viewed from the front, the center of the outer lid 41 and the center of the stopper 31 are connected to each other by the connecting member 46. Furthermore, a seal 47 (for example, a rubber washer or an O-ring) is provided between the head of the connecting member 46 and a peripheral edge portion of the through hole 44.

The cap 48 made of, for example, rubber is press-fitted into the recess 43 from the front. By attaching the cap 48 to the recess 43, the connecting member 46 becomes invisible from the outside, and the front surface of the outer lid 41 has a smooth shape.

As described above, in the electric outboard machine 1 according to the example of the present invention, the outer lid 41 and the stopper 31 are connected to each other by the connecting member 46. This configuration increases the strength of the coupling between the outer lid 41 and the cylindrical portion 5, and reliably prevents the outer lid 41 from loosening relative to the cylindrical portion 5 and from coming off the cylindrical portion 5. That is, in this example, the outer lid 41 is fastened to the front part of the peripheral edge portion 5B of the opening portion 5A of the cylindrical portion 5 by the coupling portion 42 formed at the rear part of the outer lid 41, and in addition, is fastened to the stopper 31 by the connecting member 46. The stopper 31 is fastened to the rear part of the peripheral edge portion 5B of the opening portion 5A of the cylindrical portion 5. With the above-mentioned structure, the outer lid 41 is doubly coupled and fixed to the cylindrical portion 5. Therefore, for example, it is possible to reliably prevent the outer lid 41 from loosening due to continued use or the like of the electric outboard machine 1, causing the coupling between the cylindrical portion 5 and the outer lid 41 to become incomplete, and the outer lid 41 from coming off the cylindrical portion 5.

In the electric outboard machine 1 of this example, the coupling portion 42 of the outer lid 41 is coupled to the peripheral edge portion 5B of the opening portion 5A of the cylindrical portion 5. When the outer case body 4 is viewed from the front, the center of the outer lid 41 is connected to the center of the stopper 31 by the connecting member 46. This allows both the outer periphery and the central portion of the outer lid 41 to be coupled to the cylindrical portion 5, thereby increasing the strength of the coupling of the outer lid 41 to the cylindrical portion 5.

Furthermore, according to the electric outboard machine 1 of this example, by connecting the outer lid 41 to the stopper 31, which prevents the inner lid 21 from coming off the cylindrical portion 5, via the connecting member 46, the stopper 31 can be given two functions: the function of preventing the inner lid 21 from coming off the cylindrical portion 5, and the function of increasing the strength of the coupling of the outer lid 41 to the cylindrical portion 5. This makes it possible to simplify the structure of the outer case 3, reduce the number of parts, and facilitate manufacturing (assembly) compared to the case in which a part having the function of preventing the inner lid 21 from coming off the cylindrical portion 5 and a part having the function of increasing the strength of the coupling of the outer lid 41 to the cylindrical portion 5 are prepared and these two separate parts are each attached to the cylindrical portion 5.

In the electric outboard machine 1 of this embodiment, a washer 27 is provided within the cylindrical portion 5 to restrict the stopper 31 from moving in the circumferential direction of the cylindrical portion 5. The washer 27 prevents the stopper 31 from rotating in a loosening direction, and prevents a coupling force of the outer lid 41 to the cylindrical portion 5 via the stopper 31 and the connecting member 46 from weakening due to the stopper 31 loosening from the cylindrical portion 5.

In the electric outboard machine 1 of this example, the washer 27 has the locking notch 28 that is locked onto the locking protrusion 23 of the inner lid 21, and the latching portion 29 that is latched to the stopper 31. This makes it possible to easily restrict the circumferential movement of the stopper 31 using the washer 27. In other words, when manufacturing the electric outboard machine 1, the inner lid 21 is inserted into the cylindrical portion 5, then the washer 27 is inserted into the cylindrical portion 5 while the locking protrusion 23 is inserted into the locking notch 28, then the stopper 31 is inserted (screwed) into the cylindrical portion 5, and then the latching portion 29 of the washer 27 is bent and hooked onto the stopper 31, thereby easily restricting the circumferential movement of the stopper 31.

In addition, in the electric outboard machine 1 of this example, the cylindrical portion 5 and the inner lid 21 are provided with the fixing mechanism (fitted groove 13, fitted groove 22, and key member 25) that fixes the cylindrical portion 5 and the inner lid 21 to each other in the circumferential direction of the cylindrical portion 5. This fixing mechanism can prevent the inner lid 21 from moving in the circumferential direction relative to the cylindrical portion 5. By preventing the inner lid 21 from moving circumferentially relative to the cylindrical portion 5, the washer 27 locked to the inner lid 21 via the locking protrusion 23 and the locking notch 28 can be reliably prevented from moving circumferentially relative to the cylindrical portion 5. This makes it possible to reliably restrict the stopper 31 coupled by the latching portion 29 of the washer 27 from moving in the circumferential direction relative to the cylindrical portion 5. Therefore, it is possible to reliably prevent the coupling force of the outer lid 41 to the cylindrical portion 5 via the stopper 31 and the connecting member 46 from weakening due to the stopper 31 becoming loose.

In addition, in the electric outboard machine 1 of this example, the inner lid 21 and the outer lid 41 are provided at the front of the outer case body 4, and the opening portion 5A of the cylindrical portion 5 of the outer case body 4 is doubly blocked by the inner lid 21 and the outer lid 41. Further, the seal 24 is provided between the inner lid 21 and the cylindrical portion 5 to liquid-tightly seal the space between them. With this configuration, even when the outer lid 41 is hit by an object in the water, such as driftwood, causing the outer lid 41 to be damaged and water entering the opening portion 5A of the cylindrical portion 5 through the damaged area, the inner lid 21 can prevent the water from entering the inverter accommodating portion 9 or the motor accommodating portion 10. This makes it possible to prevent electrical components such as the inverter 62 and the motor 55 from coming into contact with water in the event of an accident such as an object in water colliding with the outer case 3 from the front. Therefore, even when such an accident occurs, the generation of a propulsive force for the boat by the electric outboard machine 1 can be continued, and the boat can be moved to the shore, ensuring safe navigation.

Furthermore, as described above, when the outer lid 41 is damaged, the damage can be repaired by replacing the outer lid 41. In other words, there is no need to replace the outer case body 4 when repairing the damage. Therefore, repair costs can be reduced.

In the electric outboard machine 1 of this example, the inner lid 21, the washer 27, the stopper 31, and the outer lid 41 are each detachably attached to the cylindrical portion 5. This configuration makes it possible to easily manufacture or repair the electric outboard machine 1. For example, the outer lid 41, the stopper 31, the washer 27, and the inner lid 21 can be removed from the cylindrical portion 5, and a tool can be inserted through the opening portion 5A on the front side of the cylindrical portion 5 to remove the fastening member 12 that secures the motor 55 to the cylindrical portion 5. This makes it possible to easily remove the motor 55 from the cylindrical portion 5.

In the above example, the coupling portion 42 of the outer lid 41 is screwed to the peripheral edge portion 5B of the opening portion 5A of the cylindrical portion 5, but the present invention is not limited to this. For example, as in the outer lid 81 illustrated in FIG. 10, a locking claw 83 may be provided at a coupling portion 82 of an outer lid 81, and a locking recess may be provided on an inner peripheral surface of a front part of the peripheral edge portion 5B of the opening portion 5A of the cylindrical portion 5, and the locking claw 83 may be inserted into the locking recess so that the outer lid 81 is locked and coupled to the cylindrical portion 5. Similarly, the stopper 31 may be modified from a structure in which it is screwed onto the cylindrical portion 5 to a structure in which it is locked to the cylindrical portion 5 by a locking claw, similar to the outer lid 81. The outer lid or the stopper may be coupled to the cylindrical portion by a bayonet or notch method.

In the example described above, the outer lid 41 is connected to the stopper 31 via the connecting member 46, but the present invention is not limited to this. For example, a plate-shaped member having a plate-like outer shape that extends in the up-down and left-right directions when viewed overall may be prepared specifically for fixing the outer lid 41, and the plate-shaped member may be fitted and fixed within the cylindrical portion 5 at the rear of the outer lid 41 and in front of the inverter accommodating portion 9, and the outer lid 41 may be connected to the plate-shaped member via the connecting member 46. In addition, the outer lid 41 may be connected to the inner lid 21 via a connecting member. In this case, the inner lid 21 is a specific example of a "plate-shaped member".

Furthermore, the present invention can be modified as appropriate without departing from the spirit or concept of the invention as can be read from the claims and the entire specification, and electric outboard machines with such modifications are also included in the technical concept of the present invention.

### REFERENCE SIGNS LIST

1: electric outboard machine
2: lower unit
3: outer case (case)
5: cylindrical portion
5A: opening portion
5B: peripheral edge portion
10: motor accommodating portion
13: fitted groove (first fitted portion)
21: inner lid
22: fitted groove (second fitted portion)
23: locking protrusion
25: key member (fixing mechanism)
27: washer (movement restricting member)
28: locking notch (locking portion)
29: latching portion
31: stopper (plate-shaped member)
41, 81: outer lid
46: connecting member
51: propeller
55: motor

## Claims

1. An electric outboard machine (1) for propelling a boat, comprising:
a case (3) provided in a lower part of the electric outboard machine;
a propeller (51) rotatably supported in the case; and
a motor (55) provided in the case and configured to rotate the propeller,
wherein the case (3) includes:
a cylindrical portion (5) including an axis extending in a front-rear direction, the cylindrical portion being formed in a cylindrical shape with an open front side, and the cylindrical portion being provided with a motor accommodating portion (10) in which the motor is accommodated;
an outer lid (41, 81) coupled to a peripheral edge portion (5B) of an opening portion (5A) on a front side of the cylindrical portion, and the outer lid being configured to close the opening portion;
a plate-shaped member (31) provided in the cylindrical portion behind the outer lid and in front of the motor accommodating portion, the plate-shaped member having a plate-like outer shape extending in up-down and left-right directions in an overall view, the plate-shaped member being fitted into the cylindrical portion and fixed to the cylindrical portion, and
a connecting member (46) configured to connect the outer lid and the plate-shaped member to each other.

2. The electric outboard machine according to claim 1, further comprising:
an inner lid provided in the cylindrical portion behind the plate-shaped member and in front of the motor accommodating portion, the inner lid configured to close the opening portion,
wherein the plate-shaped member is a stopper configured to prevent the inner lid from coming off the cylindrical portion.

3. The electric outboard machine according to claim 2, wherein a movement restricting member is provided within the cylindrical portion to restrict the stopper from moving in a circumferential direction of the cylindrical portion.

4. The electric outboard machine according to claim 3, wherein the movement restricting member is a washer including a locking portion and a latching portion, the locking portion is locked to the inner lid, and the latching portion is latched to the stopper.

5. The electric outboard machine according to claim 2, wherein the cylindrical portion and the inner lid are provided with a fixing mechanism for fixing the cylindrical portion and the inner lid to each other in a circumferential direction of the cylindrical portion.

6. The electric outboard machine according to claim 5, wherein the fixing mechanism includes a first fitted portion provided on the cylindrical portion, a second fitted portion provided on the inner lid, and a key member that fits with each of the first fitted portion and the second fitted portion.

7. The electric outboard machine according to claim 1, wherein, when the case is viewed from the front, a central portion of the outer lid and a central portion of the plate-shaped member are connected to each other by the connecting member.
